# EUROPEAN PATENT APPLICATION

(11) **EP 4 520 630 A1**
(43) Date of publication of application: **12.03.2025**
(21) Application number: 23799433.0
(22) Date of filing: 13.04.2023
(51) Int. Cl.: B62D 3/12, F16F 9/16, F16F 9/58

(54) **LINEAR-MOTION DAMPER AND STEERING DEVICE**

(30) Priority: 02.05.2022 JP 2022076118
(71) Applicant: Somic Management Holdings Inc., Sumida-ku Tokyo 130-0004 (JP)
(72) Inventor: NAKAYA Kazumasa, Hamamatsu-shi, Shizuoka 431-2103 (JP)
(74) Representative: Zimmermann, Tankred Klaus
(86) International application number: PCT/JP2023/015079
(87) International publication number: WO 2023/214501

(57) **Abstract**

Provided are a linear damper capable of providing favorable workability in assembly and maintenance and a steering device including the linear damper. A steering device (100) includes a linear damper (120) between a rack bar (103) and a rack end (106). In the linear damper (120), a relative displacement body (140) is provided reciprocatably displaceable in an inner chamber forming body (121) formed in a cylindrical shape. In the inner chamber forming body (121), a first inner chamber (125a) and a second inner chamber (125b) are formed on both sides of a valve support portion (123) supporting first flow control valves (127) and a second flow control valve (128), and an elastic body housing portion (130) is formed adjacent to the second inner chamber (125b). The elastic body housing portion (130) is formed so as to communicate with the outside, and houses a return elastic body (131) therein.

## Description

### TECHNICAL FIELD

The present invention relates to a linear damper configured to damp motion energy of linear motion and a steering device including the linear damper.

### BACKGROUND ART

Typically, there has been a linear damper configured to damp motion energy of linear motion. For example, in a linear damper disclosed in Patent Literature 1 below, an impact load caused between a rack end and a rack housing in a steering device of a self-propelled vehicle is reduced by damping force generated on the rack end displaceable relative to the rack housing by limiting the flow of fluid.

### CITATION LIST

### PATENT LITERATURE

PATENT LITERATURE 1: WO 2021/246082 A

### SUMMARY OF INVENTION

However, in the linear damper disclosed in Patent Literature 1 above, a return elastic body configured to elastically press a relative displacement body, to which the rack end is coupled, to the rack end side is provided in an inner chamber filled with fluid. Thus, there has been a problem that it is difficult to perform each process in assembly and maintenance of the linear damper.

The present invention has been made in order to cope with the above-described problem. An object of the present invention is to provide a linear damper capable of providing favorable workability in assembly and maintenance and a steering device including the linear damper.

**In** order to achieve the above-described object, the present invention features a linear damper including an inner chamber forming body formed in a tubular shape and having, inside a tubular portion, an inner chamber where fluid is liquid-tightly housed, a relative displacement body slidably fitted in the inner chamber forming body and formed displaceable relative to the inner chamber forming body, and a flow control valve provided for at least one of the inner chamber forming body or the relative displacement body to allow the fluid to flow while limiting a flow of the fluid, and the linear damper being arranged between two attachment target objects linearly displaceable relative to each other to damp external force received due to relative displacement by limiting the flow of the fluid. The lineal damper includes a return elastic body configured to provide elastic force to the relative displacement body and elastically receive the external force. The inner chamber forming body has an elastic body housing portion configured to house the return elastic body in the inner chamber forming body with communicating with an outside, and the return elastic body is housed in the elastic body housing portion.

According to this configuration, the linear damper has the elastic body housing portion for housing the return elastic body in the inner chamber forming body with communicating with the outside. Thus, the return elastic body can be easily housed in the elastic body housing portion, and favorable workability in assembly and maintenance of the linear damper can be provided.

Another feature of the present invention pertains to the linear damper in which the elastic body housing portion is formed at one end portion of the inner chamber forming body so as to communicate with the outside through an opening formed with such a size that the return elastic body is able to be taken in and out through the opening.

According to this configuration, in the linear damper, the elastic body housing portion is formed at the one end portion of the inner chamber forming body so as to communicate with the outside through the opening formed with such a size that the return elastic body can be taken in and out through the opening. Thus, in assembly and maintenance of the linear damper, the return elastic body can be easily taken in and out of the inner chamber forming body.

Another feature of the present invention pertains to the linear damper further includes: an elastic body receiving body attached to the opening of the inner chamber forming body to receive the elastic force of the return elastic body.

According to this configuration, the linear damper includes the elastic body receiving body attached to the opening of the inner chamber forming body to receive the elastic force of the return elastic body. This can prevent the return elastic body from coming out of the inner chamber forming body, and can provide favorable workability in assembly and maintenance of the linear damper.

Still another feature of the present invention is the linear damper, in which the elastic body receiving body has a bumper portion formed of an elastic body, and the bumper portion is arranged at such a position that one of the two attachment target objects bumps the bumper portion by the relative displacement of the inner chamber forming body and elastically receives the bump.

According to this configuration, in the linear damper, the elastic body receiving body has the bumper portion formed of the elastic body. The bumper portion is arranged at such a position that one of the two attachment target objects bumps the bumper portion and elastically receives such bump. Thus, occurrence of impact noise or impact upon bump can be effectively reduced. In this case, the bumper portion can be made of an elastomer material. The elastomer material is, for example, a rubber material or a resin material which can elastically receive impact upon collision of the bumper portion with an object. More specifically, the elastomer material includes, for example, thermosetting elastomer materials (e.g., vulcanized rubber, urethane rubber, silicone rubber, and fluorine-containing rubber) and thermoplastic elastomer materials (e.g., styrene-based, olefin-based, vinyl chloride-based, urethane-based, and amide-based resins). Needless to say, the bumper portion may be made of a material other than the elastomer material, such as a metal plate or coil spring.

Further, another feature of the present invention is the linear damper, in which the inner chamber has a first inner chamber and a second inner chamber where the fluid flows through the flow control valve, the relative displacement body has a first inner chamber forming wall forming the first inner chamber while a volume of the first inner chamber is increasing or decreasing by the relative displacement of the relative displacement body, and a second inner chamber forming wall forming the second inner chamber while a volume of the second inner chamber is increasing or decreasing by the relative displacement of the relative displacement body, and one of the first inner chamber forming wall or the second inner chamber forming wall forms the elastic body housing portion while a volume of the elastic body housing portion is increasing or decreasing by the relative displacement of the relative displacement body.

According to this configuration, in the linear damper, the relative displacement body includes the first inner chamber forming wall and the second inner chamber forming wall each forming the first inner chamber and the second inner chamber. Further, one of the first inner chamber forming wall or the second inner chamber forming wall forms the elastic body housing portion while the volume of the elastic body housing portion is increasing or decreasing. Thus, the device configuration can be simplified and reduced in size.

The present invention can be implemented not only as the linear damper but also as a steering device including the linear damper.

Specifically, a steering device includes: a steering shaft formed so as to extend in a bar shape and configured to rotate by operation of a steering wheel; a rack bar formed to extend in a bar shape to transmit a reciprocating motion, converted from a rotary motion of the steering shaft, in an axis direction; an intermediate coupling body coupled to each end portion of the rack bar and directly or indirectly coupling a wheel targeted for steering to each end portion; and a rack housing covering the rack bar. The steering device includes the linear damper according to claim 1, in which the linear damper is provided between the rack housing and the rack bar or the intermediate coupling body to damp impact from the wheel and/or impact due to inertial force from a side of the steering shaft. According to this configuration, features and effects similar to those of the above-described linear damper can be expected from the steering device according to the present invention.

In this case, in the steering device, the relative displacement body may be connected to the intermediate coupling body, and the inner chamber forming body may be formed so as to contact or separate from the rack housing by the reciprocating motion of the rack bar.

According to this configuration, in the steering device according to the present invention, the relative displacement body is connected to the intermediate coupling body. Further, the inner chamber forming body is formed so as to contact or separate from the rack housing by the reciprocating motion of the rack bar, and the damper is provided for the intermediate coupling body such as a tie rod or a rack end. Thus, maintenance or replacement of the linear damper can be facilitated.

### BRIEF DESCRIPTION OF DRAWINGS

Fig. 1 is a schematic view for describing the outline of an entire configuration of a steering device according to an embodiment of the present invention.
Fig. 2 is a perspective view showing, from a rack end coupling portion side of a relative displacement body, the outline of an external configuration of a linear damper forming the steering device shown in Fig. 1.
Fig. 3 is a perspective view showing, from a bumper portion side, the outline of the external configuration of the linear damper forming the steering device shown in Fig. 1.
Fig. 4 is a front view showing, from the bumper portion side, the outline of the external configuration of the linear damper shown in Fig. 1.
Fig. 5 is a sectional view showing the outline of an internal configuration of the linear damper along a 5-5 line shown in Fig. 4.
Fig. 6 is a sectional view showing a state at the moment when an inner chamber forming body contacts a rack housing in the linear damper shown in Fig. 5.
Fig. 7 is a sectional view showing a state when the inner chamber forming body is pressed to the rack housing side in the linear damper shown in Fig. 6.

### DESCRIPTION OF EMBODIMENTS

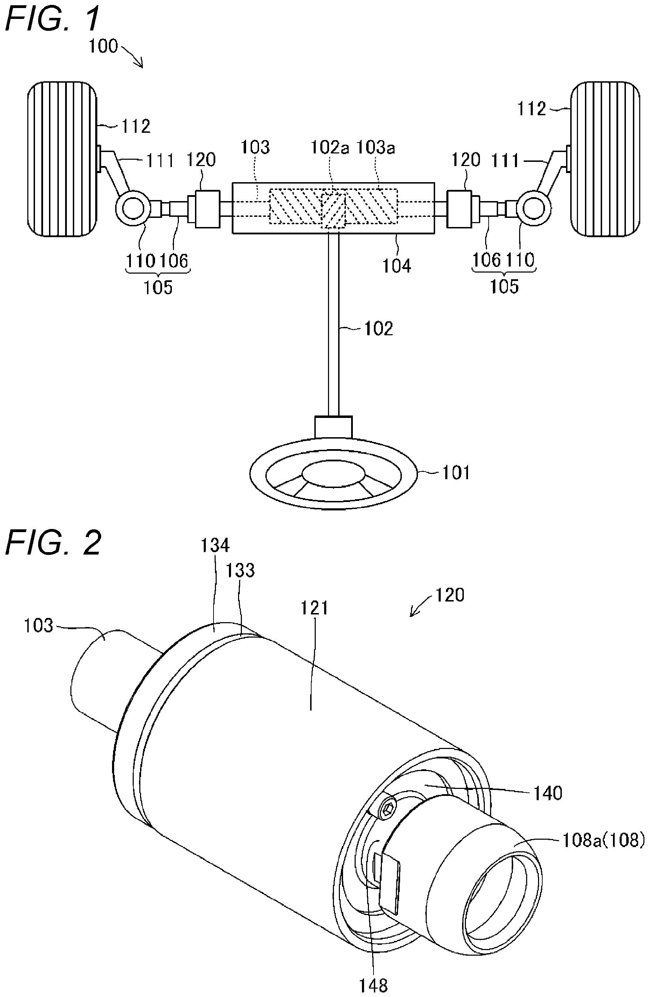

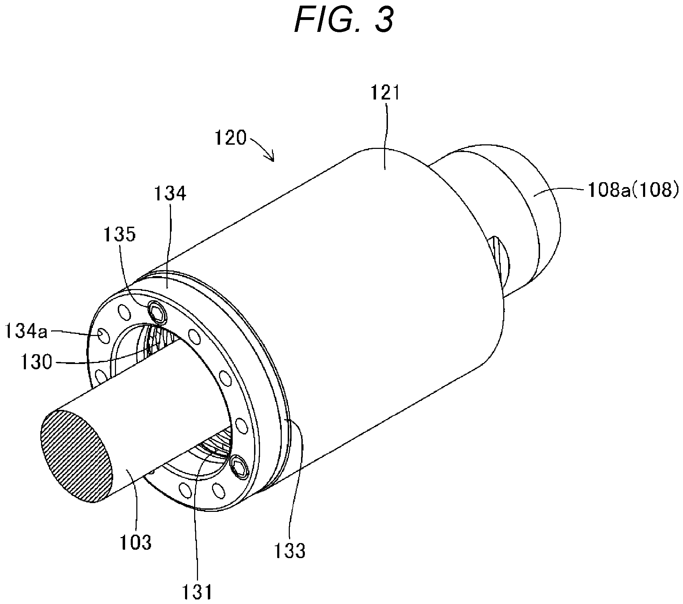

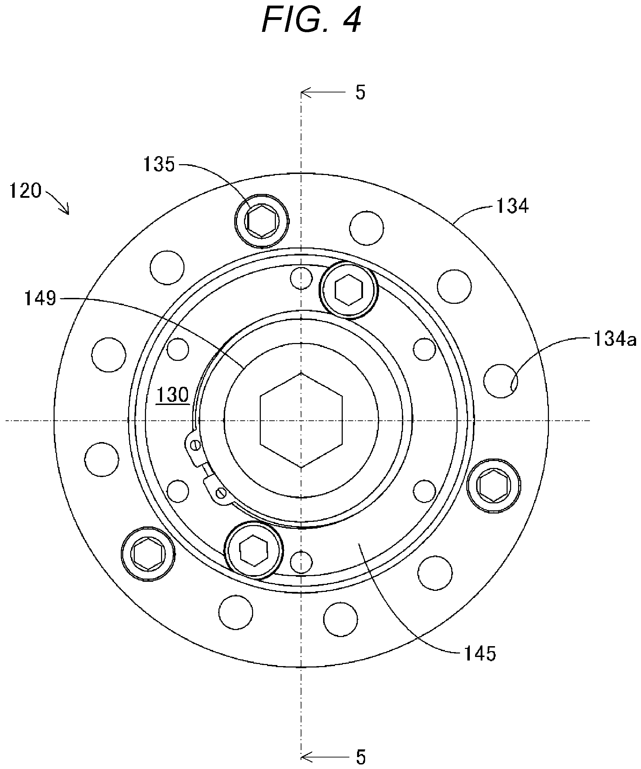

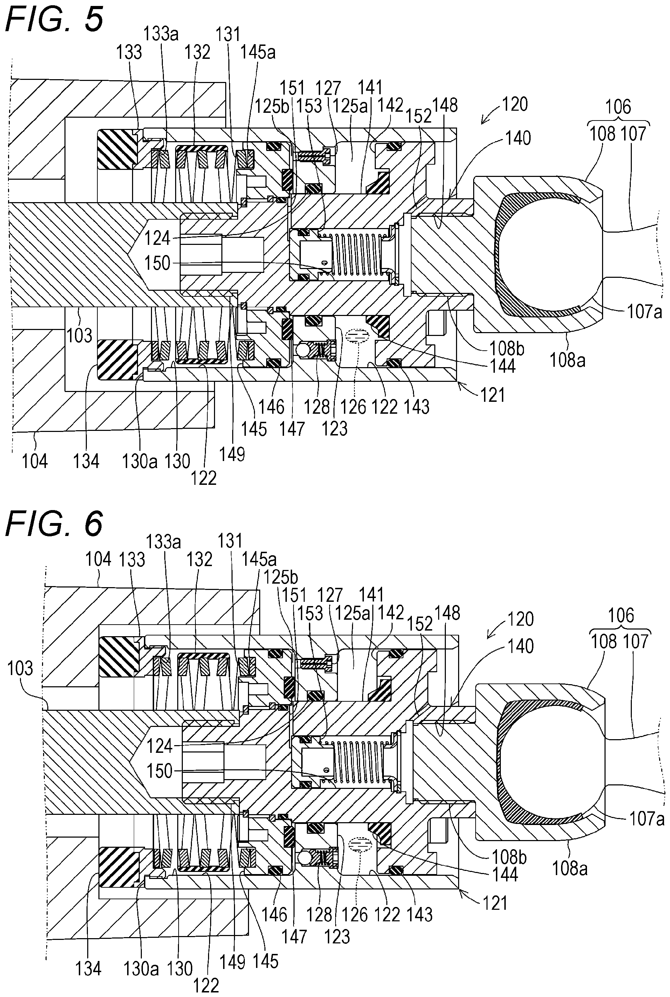

Hereinafter, one embodiment of a steering device including a linear damper according to the present invention will be described with reference to the drawings. Fig. 1 is a schematic view describing the outline of an entire configuration of a steering device 100 according to the embodiment of the present invention. Fig. 2 is a perspective view showing, from a rack end coupling portion side of a relative displacement body 140, the outline of an external configuration of a linear damper 120 forming the steering device 100 shown in Fig. 1. Fig. 3 is a perspective view showing, from a bumper portion 134 side, the outline of the external configuration of the linear damper 120 forming the steering device 100 shown in Fig. 1. Fig. 4 is a front view showing, from the bumper portion 134 side, the outline of the external configuration of the linear damper 120 shown in Fig. 1. Fig. 5 is a sectional view of the outline of an internal configuration of the linear damper 120 along a 5-5 line shown in Fig. 4. Note that in Figs. 2 and 3, the linear damper 120 is shown together with a rack bar 103 and a socket 108 not forming the linear damper 120.

The steering device 100 is a mechanical device for steering two front wheels (or rear wheels) of a four-wheeled self-propelled vehicle (not shown) in the right-left direction.

### (Configuration of Steering Device 100)

The steering device 100 includes a steering wheel 101. The steering wheel 101 is an operator (i.e., handle) for manually operating a travelling direction by a driver of the self-propelled vehicle. The steering wheel 101 is produced in such a manner that a resin material or a metal material is formed into a circular ring shape. A steering shaft 102 is coupled to the steering wheel 101.

The steering shaft 102 is a component formed in a bar shape and configured to rotate about an axis according to clockwise or counterclockwise rotary operation of the steering wheel 101. The steering shaft 102 is produced in such a manner that one or more metal bars are coupled via, e.g., a universal joint. The steering wheel 101 is coupled to one end portion of the steering shaft 102. A pinion gear 102a is formed at the other end portion, and a rack bar 103 is coupled thereto.

The rack bar 103 is a component formed in a bar shape and configured to reciprocatably displace in an axis direction to transmit steering force for two wheels 112 and the amount of steering of each wheel 112 to knuckle arms 111. The rack bar 103 is made of a metal material. In this case, a rack gear 103a is formed at part of the rack bar 103, and engages with the pinion gear 102a of the steering shaft 102. That is, the pinion gear 102a and the rack gear 103a form a rack-and-pinion mechanism (steering gear box) configured to convert rotary motion of the steering shaft 102 into linear reciprocating motion of the rack bar 103.

Both end portions of the rack bar 103 in the axis direction are exposed from a rack housing 104 with the rack-and-pinion mechanism covered with the rack housing 104. Each wheel 112 is coupled to a corresponding one of the both end portions of the rack bar 103 exposed from the rack housing 104 via the linear damper 120, an intermediate coupling body 105, and the knuckle arm 111.

The rack housing 104 is a component for covering and protecting a main portion of the rack bar 103, such as the rack-and-pinion mechanism. The rack housing 104 is produced in such a manner that a metal material is formed into a cylindrical shape. The rack housing 104 is attached in a fixed manner to a chassis (not shown) of the self-propelled vehicle.

The intermediate coupling body 105 is a component for transmitting the steering force and the steering amount, which are transmitted from the rack bar 103, to the knuckle arm 111. The intermediate coupling body 105 mainly includes a rack end 106 and a tie rod 110. The rack end 106 is a component which movably couples the tie rod 110 to a tip end portion of the rack bar 103 and to which the linear damper 120 is coupled. The rack end 106 mainly includes a stud 107 and a socket 108.

The stud 107 is a component for movably coupling the tie rod 110 to the socket 108. The stud 107 is produced in such a manner that a metal material is formed into a round bar shape. A spherical ball portion 107a is formed at one (left as viewed in the figure) end portion of the stud 107, and an external thread portion (not shown) to be screwed into an end portion of the tie rod 110 is formed at the other (right as viewed in the figure) end portion.

The socket 108 is a component for movably coupling the stud 107 to a tip end portion of a relative displacement body 140. The socket 108 is produced in such a manner that a metal material is formed into a round bar shape. More specifically, the socket 108 mainly includes a socket body 108a and a coupling portion 108b. The socket body 108a is a portion slidably holding the ball portion 107a. The socket body 108a is formed in a recessed spherical shape covering the ball portion 107a. The coupling portion 108b is a shaft-shaped portion to be coupled to the relative displacement body 140. The coupling portion 108b is formed with an external thread portion to be screwed into the relative displacement body 140.

The tie rod 110 is a component movably coupling the knuckle arm 111 to a tip end portion of the rack end 106. The tie rod 110 is produced in such a manner that a ball joint is movably attached to a tip end portion of a tie rod body extending in a bar shape. The knuckle arm 111 is a metal component for holding the wheel 112 on the tie rod 110 and transmitting the steering force and the steering amount, which are transmitted from the tie rod 110, to the wheel 112. The knuckle arm 111 is formed in such a shape that multiple bar-shaped bodies extend from the periphery of a cylindrical portion. The wheels 112 are a pair of right and left components configured to roll on a road surface to move the self-propelled vehicle forward or backward. The wheel 112 is produced in such a manner that a rubber tire is attached to the outside of a metal wheel.

The linear damper 120 is a tool for absorbing inertial force from the steering shaft 102 side and/or strong pressing force (impact) transmitted from the wheel 112. The linear damper 120 is provided between each of the right and left intermediate coupling bodies 105 and each end portion of the rack bar 103. The linear damper 120 includes an inner chamber forming body 121.

The inner chamber forming body 121 is a component forming a first inner chamber 125a, a second inner chamber 125b and an elastic body housing portion 130 and supporting the relative displacement body 140. The inner chamber forming body 121 is produced in such a manner that a metal material is formed into a cylindrical shape. In the inner chamber forming body 121, a valve support portion 123 is formed at a center portion of an inner peripheral surface 122 in the axial direction thereof. The valve support portion 123 is a portion supporting first flow control valves 127, a second flow control valve 128, and the relative displacement body 140. The valve support portion 123 is formed so as to project inward in the radial direction in a circular ring shape from the inner peripheral surface 122.

The valve support portion 123 is formed with four through-holes (only two are illustrated), which penetrate the valve support portion 123 in the axial direction thereof, at equal intervals along the circumferential direction. The first flow control valves 127 (only one is illustrated) are each fitted and held in three of these four through-holes. Further, the second flow control valve 128 is fitted and held in the remaining through-hole. A seal ring 124 formed of an elastic body is fitted in the inner peripheral surface of the valve support portion 123, and the relative displacement body 140 is slidably fitted in the inner peripheral surface of the valve support portion 123 in this state. With this configuration, the first inner chamber 125a and the second inner chamber 125b are formed on both sides of the valve support portion 123 in the axis direction of the inner chamber forming body 121.

The first inner chamber 125a and the second inner chamber 125b are portions where fluid 126 is liquid-tightly housed. The first inner chamber 125a and the second inner chamber 125b are formed in a circular tubular shape extending in the axis direction on an outer peripheral portion of the relative displacement body 140. That is, the first inner chamber 125a and the second inner chamber 125b are formed as spaces between the relative displacement body 140 and the inner chamber forming body 121. In this case, the first inner chamber 125a is formed between a first inner chamber forming wall 142 of the relative displacement body 140 and the valve support portion 123 in a cylindrical portion of the inner chamber forming body 121 opened at the right end portion as viewed in the figure.

The second inner chamber 125b is formed between a second inner chamber forming wall 145 of the relative displacement body 140 and the valve support portion 123 in a cylindrical portion of the inner chamber forming body 121 opened at the left end portion as viewed in the figure. The volumes of the first inner chamber 125a and the second inner chamber 125b change according to the position of the relative displacement body 140 reciprocatably sliding in the inner chamber forming body 121. The first inner chamber 125a and the second inner chamber 125b are equivalent to an inner chamber according to the present invention.

The fluid 126 is a substance causing the linear damper 120 to fulfill a damper function using resistance when flowing in each of the three first flow control valves 127 arranged between the first inner chamber 125a and the second inner chamber 125b. The inside of the spaces formed as the first inner chamber 125a and the second inner chamber 125b is filled with the fluid 126. The fluid 126 includes a liquid, gel, or semisolid substance having flowability and viscosity according to the specifications of the linear damper 120. In this case, the viscosity of the fluid 126 is selected as necessary according to the specifications of the linear damper 120. In the present embodiment, the fluid 126 includes, for example, oil such as mineral oil and silicone oil. Note that in Figs. 5 to 7, the fluid 126 is hatched in dashed circles.

Each of the three first flow control valves 127 is configured as a valve allowing the fluid 126 to flow in both directions while limiting the flow of the fluid 126 between the first inner chamber 125a and the second inner chamber 125b. In this case, the flow of the fluid 126 being limited in the first flow control valve 127 means that as compared to the degree of ease of flow of the fluid 126 in the flow direction thereof in the second flow control valve 128, the fluid 126 is less likely to flow under the same conditions (e.g., a pressure and a hydraulic fluid viscosity).

The second flow control valve 128 is configured as a valve allowing the fluid 126 to flow from the second inner chamber 125b side to the first inner chamber 125a side and blocking the flow of the fluid 126 from the first inner chamber 125a side to the second inner chamber 125b side.

The elastic body housing portion 130 is a portion housing a return elastic body 131. The elastic body housing portion 130 is formed in a circular tubular shape extending in the axis direction outside the outer peripheral portion of the relative displacement body 140 in the inner chamber forming body 121. In this case, the elastic body housing portion 130 is formed on the opposite side of the second inner chamber forming wall 145 of the relative displacement body 140 from the second inner chamber 125b in a cylindrical portion of the inner chamber forming body 121 having an opening 130a opened at the left end portion as viewed in the figure. That is, the elastic body housing portion 130 is formed adjacent to the second inner chamber 125b through the second inner chamber forming wall 145 in the cylindrical portion common to that for the second inner chamber 125b. The elastic body housing portion 130 is formed so as to be opened with a size which is the outer diameter of the return elastic body 131 or more at the left end portion of the inner chamber forming body 121 as viewed in the figure.

The return elastic body 131 is a component for elastically pressing the second inner chamber forming wall 145 and the first inner chamber forming wall 142 of the relative displacement body 140 against the right end portions in the second inner chamber 125b and the first inner chamber 125a as viewed in the figure. The return elastic body 131 is produced in such a manner that multiple metal wave springs are arranged on one another in the axis direction of the elastic body housing portion 130. Of the return elastic body 131, one (right as viewed in the figure) end portion elastically presses the second inner chamber forming wall 145, and the other (left as viewed in the figure) end portion elastically presses an elastic body receiving body 133. A cover 132 is provided at an outer peripheral portion of the return elastic body 131.

The cover 132 is a component for preventing the wave springs to resonate with vibration due to an engine or an operating state of a self-propelled vehicle such as the condition of a road surface on which the self-propelled vehicle travels. The cover 132 is formed of an elastic body capable of damping the vibration of the return elastic body 131, such as elastomer. In the present embodiment, the cover 132 is made of a tubular rubber material closely contacting an outer peripheral portion of part of the wave springs forming the return elastic body 131. Note that the cover 132 may be configured to cover the entirety of the wave springs forming the return elastic body 131.

The elastic body receiving body 133 is a component for receiving the elastic force of the return elastic body 131 and supporting the bumper portion 134. The elastic body receiving body 133 is produced in such a manner that a metal material is formed into a tubular shape. More specifically, the elastic body receiving body 133 is formed, at the right end portion as viewed in the figure, with a recessed fitting portion 133a for regulating the position of the fitted return elastic body 131. Further, an external thread to be screwed into the opening 130a forming the left end portion of the inner chamber forming body 121 as viewed in the figure is formed at an outer portion of the fitting portion 133a. In addition, the elastic body receiving body 133 is formed, at the left end portion as viewed in the figure, with a circular ring-shaped recessed groove in which the bumper portion 134 is to be fitted.

The bumper portion 134 is a component for buffering impact when the linear damper 120 collides with the rack housing 104. The bumper portion 134 is produced in such a manner that an elastically-deformable elastic body is formed into a cylindrical shape. In the present embodiment, the bumper portion 134 is produced in such a manner that a rubber material is formed into a cylindrical shape having the same outer and inner diameters as those of the elastic body receiving body 133. Elastic adjustment holes 134a are formed in the bumper portion 134 along the circumferential direction thereof.

The elastic adjustment hole 134a is a portion for adjusting the elastic force of the bumper portion 134. The elastic adjustment hole 134a is configured as a through-hole or a bottomed hole. In the present embodiment, the elastic adjustment holes 134a are configured as bottomed holes with a depth of about the half of the length of the bumper portion 134 in the axis direction at equal intervals between three bolts 135 arranged in the circumferential direction. Moreover, three through-holes are formed at equal intervals along the circumferential direction in the bumper portion 134. The bumper portion 134 is attached to the elastic body receiving body 133 in such a manner that the bolts 135 screwed into the elastic body receiving body 133 penetrate these through-holes. That is, at the left end portion of the inner chamber forming body 121 as viewed in the figure, the elastic body housing portion 130 is opened to the outside and communicates with the outside with part of the opening 130a closed with the elastic body receiving body 133 and the bumper portion 134.

The relative displacement body 140 is a component for coupling the rack bar 103 and the rack end 106 to each other and forming, together with the inner chamber forming body 121, the first inner chamber 125a and the second inner chamber 125b. The relative displacement body 140 is produced in such a manner that a metal material is formed into a round bar shape. The relative displacement body 140 mainly includes an inner chamber facing portion 141, the first inner chamber forming wall 142, the second inner chamber forming wall 145, a rack end coupling portion 148, a rack bar coupling portion 149, and a compensation device housing portion 150.

The inner chamber facing portion 141 is a portion which forms the first inner chamber 125a and the second inner chamber 125b and on which the valve support portion 123 slides. The inner chamber facing portion 141 includes a smooth curved surface having a circular section. The inner chamber facing portion 141 is formed at a center portion of the relative displacement body 140 in the axis direction.

The first inner chamber forming wall 142 is a portion forming the first inner chamber 125a and configured to slide on the inner peripheral surface 122 of the inner chamber forming body 121 to press the fluid 126. The first inner chamber forming wall 142 is formed so as to project in a flange shape from one (right as viewed in the figure) end portion of the inner chamber facing portion 141. In this case, the first inner chamber forming wall 142 is integrally made of the same material as that of the relative displacement body 140. A seal ring 143 formed of an elastic body is fitted in an outer peripheral portion of the first inner chamber forming wall 142, and on the outer peripheral portion of the first inner chamber forming wall 142 in this state, the inner peripheral surface 122 of the inner chamber forming body 121 is slidably fitted. The first inner chamber forming wall 142 is provided with a first displacement limit defining portion 144 at an end surface on the first inner chamber 125a side.

The first displacement limit defining portion 144 is a component for defining the displacement limit of one of both ends of the relative displacement body 140 in the displacement range thereof and buffering impact upon bump when the first inner chamber forming wall 142 displaces to the valve support portion 123 side and bumps the first displacement limit defining portion 144. The first displacement limit defining portion 144 is produced in such a manner that an elastically-deformable elastic body is formed into a circular ring shape. In the present embodiment, the first displacement limit defining portion 144 is made of a rubber material. Moreover, the first displacement limit defining portion 144 is formed in a tapered conical shape having a greater outer diameter on the first inner chamber forming wall 142 side than on the valve support portion 123 side.

The second inner chamber forming wall 145 is a portion forming each of the second inner chamber 125b and the elastic body housing portion 130 and configured to slide on the inner peripheral surface 122 of the inner chamber forming body 121 to press the fluid 126. The second inner chamber forming wall 145 is provided so as to project in a flange shape from the other (left as viewed in the figure) end portion of the inner chamber facing portion 141. In this case, the second inner chamber forming wall 145 slides in the inner chamber forming body 121 while receiving the elastic force of the return elastic body 131 housed in the elastic body housing portion 130.

The second inner chamber forming wall 145 is produced in such a manner that a metal material different from that of the relative displacement body 140 is formed into a circular ring shape. The second inner chamber forming wall 145 is screwed onto an outer peripheral portion of the relative displacement body 140, and accordingly, is integrated with the relative displacement body 140. In this case, a seal ring 146 formed of an elastic body is fitted in an outer peripheral portion of the second inner chamber forming wall 145, and on the outer peripheral portion of the second inner chamber forming wall 145 in this state, the inner peripheral surface 122 of the inner chamber forming body 121 is slidably fitted. The second inner chamber forming wall 145 is formed, at the end surface on the elastic body housing portion 130 side, with a receiving recess 145a recessed in a circular ring shape and configured such that the return elastic body 131 is fitted therein. On the other hand, the second inner chamber forming wall 145 is provided with a second displacement limit defining portion 147 at the end surface on the second inner chamber 125b side.

The second displacement limit defining portion 147 is a component for defining the displacement limit of the other end of the relative displacement body 140 in the displacement range thereof and buffering impact upon bump when the second inner chamber forming wall 145 displaces to the valve support portion 123 side and bumps the second displacement limit defining portion 147. The second displacement limit defining portion 147 is produced in such a manner that an elastically-deformable elastic body is formed into a circular ring shape. In the present embodiment, the second displacement limit defining portion 147 is made of a rubber material.

The rack end coupling portion 148 is a portion to which the socket 108 of the rack end 106 is to be coupled. The rack end coupling portion 148 extends in the axis direction of the relative displacement body 140, and is formed in a bottomed hole opened at the right end portion as viewed in the figure. In this case, in the rack end coupling portion 148, an internal thread to be screwed onto the external thread of the coupling portion 108b of the socket 108 is formed at the inner peripheral surface of the bottomed hole.

The rack bar coupling portion 149 is a portion to which the rack bar 103 is to be coupled. The rack bar coupling portion 149 extends in the axis direction of the relative displacement body 140, and an external thread to be screwed onto an internal thread formed at an end portion of the rack bar 103 is formed at the inner peripheral surface of a bottomed hole opened at the left end portion as viewed in the figure.

The compensation device housing portion 150 is a portion where a volume change compensation device 153 is liquid-tightly housed. The compensation device housing portion 150 is formed in a bottomed hole shape formed integrally with the rack end coupling portion 148. The compensation device housing portion 150 communicates with the second inner chamber 125b via an inner chamber communication path 151, and communicates with the atmosphere outside the linear damper 120 via an atmosphere communication path 152.

The volume change compensation device 153 is an instrument configured to compensate for a change in the volume of the fluid 126 in the first inner chamber 125a and the second inner chamber 125b due to expansion or contraction due to a temperature change. The volume change compensation device 153 is configured such that a piston reciprocatably sliding in the compensation device housing portion 150 is housed with elastically pressed to the inner chamber communication path 151 side by a coil spring. In this case, a space where the coil spring is housed communicates with the atmosphere outside the linear damper 120 via the atmosphere communication path 152.

### (Assembly of Linear Damper 120)

Here, a process of assembling the linear damper 120 will be described. A worker prepares each of the machined inner chamber forming body 121, elastic body receiving body 133, relative displacement body 140, and second inner chamber forming wall 145. Moreover, the worker prepares each commercially-available component as the seal ring 124, the fluid 126, the first flow control valve 127, the second flow control valve 128, the return elastic body 131, the bolt 135, the seal ring 146, and the volume change compensation device 153. Further, the worker prepares each molded component as the cover 132, the bumper portion 134, the first displacement limit defining portion 144, and the second displacement limit defining portion 147.

Next, the worker assembles each of the seal ring 124, the first flow control valves 127, and the second flow control valve 128 with the inner chamber forming body 121, and assemblies the relative displacement body 140 into the inner chamber forming body 121. In this case, the worker assemblies, into the inner chamber forming body 121, the relative displacement body 140 assembled with the volume change compensation device 153. Subsequently, the worker assembles, with the relative displacement body 140 assembled into the inner chamber forming body 121, the second inner chamber forming wall 145 assembled with the seal ring 146. Then, the worker fills, with the fluid 126, the inside of the first inner chamber 125a, the second inner chamber 125b, and the compensation device housing portion 150 formed as a result of the assembly of the relative displacement body 140 into the inner chamber forming body 121.

Next, the worker houses the return elastic body 131 in the elastic body housing portion 130 formed as a result of the assembly of the relative displacement body 140 into the inner chamber forming body 121. In this case, the worker houses the return elastic body 131 in the elastic body housing portion 130 through the opening 130a in a state in which part of the wave springs forming the return elastic body 131 is covered with the cover 132.

Subsequently, the worker attaches the bumper portion 134 to the elastic body receiving body 133 with the bolts 135. Thereafter, the worker screws the elastic body receiving body 133 into the opening 130a of the inner chamber forming body 121. In this case, the worker screws the elastic body receiving body 133 into the opening 130a of the inner chamber forming body 121 against the elastic force of the return elastic body 131 housed in the elastic body housing portion 130, and in this manner, can attach the bumper portion 134 and the elastic body receiving body 133 to the inner chamber forming body 121.

That is, the worker inserts the return elastic body 131 into the elastic body housing portion 130 opened through the opening 130a on the left side of the inner chamber forming body 121 as viewed in the figure and closes the opening 130a of the elastic body housing portion 130 with the elastic body receiving body 133 and the bumper portion 134, and in this manner, can assemble the return elastic body 131. In this case, each of the elastic body receiving body 133 and the bumper portion 134 is formed in the cylindrical shape, the elastic body housing portion 130 is not fully closed and is kept communicating with the outside. In this manner, the worker can assemble the linear damper 120.

Next, the worker attaches the assembled linear damper 120 to between two attachment target objects. In the present embodiment, the worker attaches the assembled linear damper 120 to between the rack bar 103 and the rack end 106. More specifically, the worker screws the rack bar coupling portion 149 of the relative displacement body 140 into the rack bar 103, and screws the rack end coupling portion 148 into the coupling portion 108b. In this manner, the worker can attach the linear damper 120 to the steering device 100. That is, the worker detaches the elastic body receiving body 133 and the bumper portion 134 from the inner chamber forming body 121 after having detached the linear damper 120 from the steering device 100 in steps opposite to those described above, and in this manner, can perform maintenance on the return elastic body 131.

### (Operation of Steering Device 100)

Next, operation of the steering device 100 configured as described above will be described. The steering device 100 is incorporated into the self-propelled vehicle as a mechanism configured to steer the wheels (e.g., the two front wheels) of the not-shown four-wheeled self-propelled vehicle in the right-left direction. The steering device 100 changes the direction of each of the two wheels 112 according to operation of the steering wheel 101 by the driver of the self-propelled vehicle, thereby determining the travelling direction of the self-propelled vehicle.

During driving of such a self-propelled vehicle, the linear dampers 120 in the steering device 100 act in the case where the rack bar 103 displaces to the vicinity of the right-left displacement limit with respect to the pinion gear 102a. In this case, the displacement limit of the rack bar 103 is the right-left steering limit of the wheels 112. The relevant case is, for example, a case where: the driver of the self-propelled vehicle has turned the steering wheel 101 clockwise or counterclockwise to the vicinity of a turning limit; and great input acts on the rack bar 103 from the wheel 112 side due to collision of the wheel 112 with an obstacle such as a curbstone.

First, a case where no external force acts on the linear damper 120 and the linear damper 120 is not operated will be described. As shown in Fig. 5, in a range where the rack bar 103 does not reach the vicinity of the displacement limit, such as a case where the wheels 112 of the self-propelled vehicle are not steered to the vicinity of the steering limit, the inner chamber forming body 121 does not collide with the rack housing 104, and therefore, the linear damper 120 is not operated. **In** this case, in the linear damper 120, the return elastic body 131 elastically presses the inner chamber forming body 121 to the left side as viewed in the figure in the displacement range of the inner chamber forming body 121, and accordingly, the second inner chamber forming wall 145 for which the displacement limit is defined is elastically pressed against the valve support portion 123 via the second displacement limit defining portion 147, as shown in Fig. 5.

Next, a case where external force acts on the linear damper 120 and the linear damper 120 is operated accordingly will be described. As shown in Fig. 6, in a case where the rack bar 103 has reached the vicinity of the displacement limit, such as a case where the wheels 112 of the self-propelled vehicle have been steered to the vicinity of the steering limit, the end portion of the inner chamber forming body 121 contacts the rack housing 104, and operation of the linear damper 120 is started accordingly. That is, the rack housing 104 is equivalent to the other one of two attachment target objects according to the present invention. Note that the intermediate coupling body 105 is equivalent to one of the two attachment target objects according to the present invention.

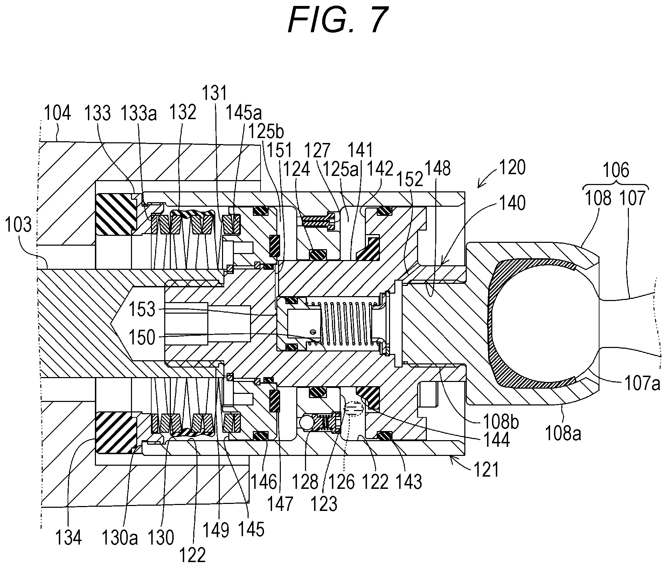

In this case, the linear damper 120 first damp impact upon bump in such a manner that the bumper portion 134 bumps the rack housing 104 and is compressed and elastically deformed accordingly. Subsequently, as shown in Fig. 7, in the linear damper 120, when the bumper portion 134 has reached an elastic deformation limit, the relative displacement body 140 displaces to the rack housing 104 side against the elastic force of the return elastic body 131 in the inner chamber forming body 121. That is, the relative displacement body 140 displaces while the first inner chamber forming wall 142 is pushing the fluid 126 toward the valve support portion 123.

In this manner, the linear damper 120 generates damping force in such a manner that the fluid 126 in the first inner chamber 125a flows with flow resistance to the second inner chamber 125b side in each of the three first flow control valves 127. Then, when the first displacement limit defining portion 144 bumps the valve support portion 123 in the linear damper 120, the first displacement limit defining portion 144 damps impact upon bump and external force of displacing the relative displacement body 140 by elastic deformation by compression.

Next, in a case where the wheels 112 of the self-propelled vehicle return to original positions after the wheels 112 have been steered to the steering limit and the rack bar 103 has reached the displacement limit, the inner chamber forming body 121 displaces to the rack housing 104 side relative to the relative displacement body 140 in the linear damper 120 after the bumper portion 134 has moved apart from the rack housing 104. That is, the inner chamber forming body 121 displaces by the elastic force of the return elastic body 131 while the valve support portion 123 is pushing the fluid 126 toward the second inner chamber forming wall 145.

Accordingly, in the linear damper 120, the fluid 126 in the second inner chamber 125b flows with extremely-small flow resistance to the first inner chamber 125a side in the single second flow control valve 128. That is, the linear damper 120 generates almost no damping force against the external force when the inner chamber forming body 121 returns. When the valve support portion 123 bumps the second displacement limit defining portion 147 in the linear damper 120, the second displacement limit defining portion 147 damps impact upon bump by elastic deformation by compression (see Fig. 5).

Note that when the bumper portion 134 of the linear damper 120 bumps the rack housing 104, the linear damper 120 moves apart from the rack housing 104 in extremely short time by reactive force of such bump or driver's handle operation for releasing the bumper portion 134. Thus, the inner chamber forming body 121 displaces to the rack housing 104 side with separated from the rack housing 104 (in other words, after having moved apart from the rack housing 104). Accordingly, the wheels 112 of the self-propelled vehicle return to the original positions.

As can be understood from description of the operation method above, the linear damper 120 has the elastic body housing portion 130 for housing the return elastic body 131 in the inner chamber forming body 121 in a state of communicating with the outside. Thus, the return elastic body 131 can be easily housed in the elastic body housing portion 130, and favorable workability in assembly and maintenance of the linear damper 120 can be provided.

Further, implementation of the present invention is not limited to the above-described embodiment, and various changes can be made without departing from the object of the present invention. Note that in description of each modification, the same reference numbers are used to represent elements similar to those of the above-described embodiment and overlapping description thereof will be omitted.

For example, in the above-described embodiment, the return elastic body 131 is formed of the wave springs. However, the return elastic body 131 is only required to be formed of an elastic body capable of providing elastic force to the relative displacement body 140 and elastically receiving external force acting on the relative displacement body 140. Thus, the return elastic body 131 may be formed of multiple wave washers, a coil spring, or elastomer.

In the above-described embodiment, the opening 130a of the elastic body housing portion 130 is formed to have the inner diameter greater than the outer diameter of the return elastic body 131. However, the opening 130a of the elastic body housing portion 130 may be formed to have the inner diameter equal to or smaller than the outer diameter of the return elastic body 131. In this case, the return elastic body 131 may be made of a material having an elastically-deformable outer diameter, such as elastomer.

In the above-described embodiment, the linear damper 120 includes the bumper portion 134. However, the linear damper 120 may be formed without the bumper portion 134.

In the above-described embodiment, the linear damper 120 includes the elastic body receiving body 133. However, the linear damper 120 may be formed without the elastic body receiving body 133. In this case, the linear damper 120 may be configured to receive the elastic force of the return elastic body 131 arranged in the elastic body housing portion 130 and support the return elastic body 131 by the second inner chamber forming wall 145 and the rack housing 104.

Furthermore, in the above-described embodiment, each of the bumper portion 134, the first displacement limit defining portion 144, and the second displacement limit defining portion 147 is made of the rubber material. However, the bumper portion 134, the first displacement limit defining portion 144, and the second displacement limit defining portion 147 are only required to be formed of elastic bodies which can elastically receive external force. In this case, a viscoelastic body which is slowly deformable in response to external force to absorb impact or vibration is preferred as the elastic body. As the viscoelastic body, a viscoelastic body having a low modulus of repulsion elasticity, specifically a viscoelastic body having a repulsion elasticity modulus of 50% or less, is preferred.

Thus, the bumper portion 134, the first displacement limit defining portion 144, and the second displacement limit defining portion 147 may be made, other than the rubber materials, of resin materials such as thermosetting elastomer materials (e.g., vulcanized rubber, urethane rubber, silicone rubber, and fluorine-containing rubber) and thermoplastic elastomer materials (e.g., styrene-based, olefin-based, vinyl chloride-based, urethane-based, and amide-based resins). Alternatively, the bumper portion 134, the first displacement limit defining portion 144, and the second displacement limit defining portion 147 may be made of materials other than the elastomer materials, such as a metal plate or coil spring and a damper sealing fluid having viscosity therein. Alternatively, the bumper portion 134, the first displacement limit defining portion 144, and the second displacement limit defining portion 147 may be produced in such a manner that a resin or metal plate having stiffness is bonded to a surface of an elastic body. According to this configuration, the bumper portion 134, the first displacement limit defining portion 144, and the second displacement limit defining portion 147 can improve abrasion resistance against a bump target object such as the rack housing 104, and can prevent damage of such a contact target object.

In the above-described embodiment, the bumper portion 134, the first displacement limit defining portion 144, and the second displacement limit defining portion 147 are formed in a circular ring shape. However, the bumper portion 134, the first displacement limit defining portion 144, and the second displacement limit defining portion 147 may be formed in annular shapes other than the circular shape (including an oval shape), such as polygonal shapes including a triangular shape, a rectangular shape, a pentagonal shape, and a hexagonal shape and irregular annular shapes. In this case, the bumper portion 134 and the second displacement limit defining portion 147 may be formed in a conical shape as in the first displacement limit defining portion 144. Alternatively, each of the bumper portion 134, the first displacement limit defining portion 144, and the second displacement limit defining portion 147 may be produced in such a manner that small pieces are arranged in an annular shape.

In the above-described embodiment, the bumper portion 134 includes the elastic adjustment holes 134a. With this configuration, the elasticity of the bumper portion 134 can be adjusted. Thus, for the bumper portion 134, the number, positions, or size of the elastic adjustment holes 134a may be freely set according to required elasticity. However, the bumper portion 134 includes at least one of the bottomed hole or the through-hole so that the elasticity thereof can be adjusted. In a case where the elastic adjustment holes 134a are not necessary, such as a case where the bumper portion 134 already has the required elasticity without the elastic adjustment holes 134a, the elastic adjustment holes 134a may be omitted.

In the above-described embodiment, the bumper portion 134 is attached to the elastic body receiving body 133 in such a manner that the bolts 135 penetrate therethrough. However, the bumper portion 134 may be attached to the elastic body receiving body 133 using a technique other than the bolts 135, such as an adhesive or welding.

In the above-described embodiment, the return elastic body 131 is configured such that part of the outer peripheral portion thereof is covered with the cover 132. However, the return elastic body 131 may be formed without the cover 132.

In the above-described embodiment, the linear damper 120 includes the first displacement limit defining portion 144 and the second displacement limit defining portion 147. With this configuration, the linear damper 120 can damp impact or external force when the relative displacement body 140 reaches the displacement limit position in response to the external force and when the relative displacement body 140 reaches the original displacement limit position before receiving the external force. However, the linear damper 120 may be formed without at least one of the first displacement limit defining portion 144 or the second displacement limit defining portion 147.

In the above-described embodiment, the linear damper 120 includes the volume change compensation device 153. However, as long as the change in the volume of the fluid 126 can be ignored, the linear damper 120 may be formed without the volume change compensation device 153. Alternatively, in the linear damper 120, the volume change compensation device 153 may be provided outside the relative displacement body 140 or the inner chamber forming body 121.

In the above-described embodiment, the linear damper 120 is configured such that the relative displacement body 140 is coupled to each of the rack bar 103 and the intermediate coupling body 105 and the inner chamber forming body 121 contacts or separates from the rack housing 104. However, the linear damper 120 may be configured such that the inner chamber forming body 121 is coupled to the rack housing 104 and the rack bar 103 or the intermediate coupling body 105 approaches or separates from the relative displacement body 140. In this case, the relative displacement body 140 is formed in a cylindrical shape such that the rack bar 103 penetrates therethrough. Further, such a portion of the relative displacement body 140 that the rack bar 103 or part of the intermediate coupling body 105 directly coupled to the rack bar 103 approaches and contacts by reciprocation displacement of the rack bar 103 is provided with the bumper portion 134. In the steering device 100, the linear damper 120 is provided at the rack housing 104. Thus, the rack bar 103 or the intermediate coupling body 105 (e.g., tie rod 110 or rack end 106) can be reduced in weight.

In the above-described embodiment, the linear damper 120 includes the four flow control valves, i.e., the three first flow control valves 127 and the single second flow control valve 128. However, the number of flow control valves and the specifications of the flow control valve are set as necessary according to the specifications of the linear damper 120, needless to say. Instead of or in addition to the inner chamber forming body 121, a flow control valve may be provided for the relative displacement body 140.

In the above-described embodiment, the linear damper 120 is applied to the steering device 100 having the mechanical configuration. However, needless to say, the linear damper 120 is applicable not only to a hydraulic power steering using a hydraulic pressure, but also to an electronic power steering using an electric motor.

In the above-described embodiment, the linear damper 120 is applied to the steering device 100. However, the linear damper 120 may be used with attached to devices or instruments other than the steering device 100, specifically a door opening/closing mechanism, a mechanical device other than the self-propelled vehicle, an electric device, an instrument, and furniture.

### LIST OF REFERENCE NUMBERS

- 100: Steering Device
- 101: Steering Wheel
- 102: Steering Shaft
- 102a: Pinion Gear
- 103: Rack Bar
- 103a: Rack Gear
- 104: Rack Housing
- 105: Intermediate Coupling Body
- 106: Rack End
- 107: Stud
- 107a: Ball Portion
- 108: Socket
- 108a: Socket Body
- 108b: Coupling Portion
- 110: Tie Rod
- 111: Knuckle Arm
- 112: Wheel
- 120: Linear Damper
- 121: Inner Chamber Forming Body
- 122: Inner Peripheral Surface
- 123: Valve Support Portion
- 124: Seal Ring
- 125a: First Inner Chamber
- 125b: Second Inner Chamber
- 126: Fluid
- 127: First Flow Control Valve
- 128: Second Flow Control Valve
- 130: Elastic Body Housing Portion
- 130a: Opening
- 131: Return Elastic Body
- 132: Cover
- 133: Elastic Body Receiving Body
- 133a: Fitting Portion
- 134: Bumper Portion
- 134a: Elastic Adjustment Hole
- 135: Bolt
- 140: Relative Displacement Body
- 141: Inner Chamber Facing Portion
- 142: First Inner Chamber Forming Wall
- 143: Seal Ring
- 144: First Displacement Limit Defining Portion
- 145: Second Inner Chamber Forming Wall
- 145a: Receiving Recess
- 146: Seal Ring
- 147: Second Displacement Limit Defining Portion
- 148: Rack End Coupling Portion
- 149: Rack Bar Coupling Portion
- 150: Compensation Device Housing Portion
- 151: Inner Chamber Communication Path
- 152: Atmosphere Communication Path
- 153: Volume Change Compensation Device

## Claims

1. A linear damper including
an inner chamber forming body formed in a tubular shape and having, inside a tubular portion, an inner chamber where fluid is liquid-tightly housed,
a relative displacement body slidably fitted in the inner chamber forming body and formed displaceable relative to the inner chamber forming body, and
a flow control valve provided for at least one of the inner chamber forming body or the relative displacement body to allow the fluid to flow while limiting a flow of the fluid, and
the linear damper being arranged between two attachment target objects linearly displaceable relative to each other to damp external force received due to relative displacement by limiting the flow of the fluid, comprising:
a return elastic body configured to provide elastic force to the relative displacement body and elastically receive the external force,
wherein the inner chamber forming body has an elastic body housing portion configured to house the return elastic body in the inner chamber forming body with communicating with an outside, and
the return elastic body is housed in the elastic body housing portion.

2. The linear damper according to claim 1, wherein
the elastic body housing portion is formed at one end portion of the inner chamber forming body so as to communicate with the outside through an opening formed with such a size that the return elastic body is able to be taken in and out through the opening.

3. The linear damper according to claim 2, further comprising
an elastic body receiving body attached to the opening of the inner chamber forming body to receive the elastic force of the return elastic body.

4. The linear damper according to claim 3, wherein
the elastic body receiving body has a bumper portion formed of an elastic body, and the bumper portion is arranged at such a position that one of the two attachment target objects bumps the bumper portion by the relative displacement of the inner chamber forming body and elastically receives the bump.

5. The linear damper according to any one of claims 1 to 4, wherein
the inner chamber has a first inner chamber and a second inner chamber where the fluid flows through the flow control valve,
the relative displacement body has
a first inner chamber forming wall forming the first inner chamber while a volume of the first inner chamber is increasing or decreasing by the relative displacement of the relative displacement body, and
a second inner chamber forming wall forming the second inner chamber while a volume of the second inner chamber is increasing or decreasing by the relative displacement of the relative displacement body, and
one of the first inner chamber forming wall or the second inner chamber forming wall forms the elastic body housing portion while a volume of the elastic body housing portion is increasing or decreasing by the relative displacement of the relative displacement body.

6. A steering device including:
a steering shaft formed so as to extend in a bar shape and configured to rotate by operation of a steering wheel;
a rack bar formed to extend in a bar shape to transmit a reciprocating motion, converted from a rotary motion of the steering shaft, in an axis direction;
an intermediate coupling body coupled to each end portion of the rack bar and directly or indirectly coupling a wheel targeted for steering to each end portion; and
a rack housing covering the rack bar, comprising:
the linear damper according to claim 1,
wherein the linear damper is provided between the rack housing and the rack bar or the intermediate coupling body to damp impact from the wheel and/or impact due to inertial force from a side of the steering shaft.

7. The steering device according to claim 6, wherein
the relative displacement body is connected to the intermediate coupling body, and
the inner chamber forming body is formed so as to contact or separate from the rack housing by the reciprocating motion of the rack bar.
